# EUROPEAN PATENT SPECIFICATION

(11) **EP 2 954 729 B1**
(45) Date of publication and mention of the grant of the patent: **17.10.2018**
(21) Application number: 14703548.9
(22) Date of filing: 10.01.2014
(51) Int. Cl.: H04W 48/16, H04W 48/20

(54) **A COMMUNICATIONS DEVICE, A MEMORY CIRCUIT AND A METHOD FOR PURGING STORED LOCATION INFORMATION OF CLOSE SUBSCRIBER GROUP CELLS IDENTIFIED AS OUTDATED**
KOMMUNIKATIONSVORRICHTUNG, SPEICHERSCHALTUNG UND VERFAHREN ZUR BEREINIGUNG ALS VERALTET IDENTIFIZIERTER GESPEICHERTER STANDORTINFORMATIONEN BENACHBARTER TEILNEHMERGRUPPENZELLEN
DISPOSITIF DE COMMUNICATION, CIRCUIT DE MÉMOIRE ET PROCÉDÉ DE PURGE D'INFORMATIONS D'EMPLACEMENT ENREGISTRÉES DE CELLULES DE GROUPE D'ABONNÉS PROCHES IDENTIFIÉES EN TANT QUE PÉRIMÉES

(30) Priority: 08.02.2013 US 201313762454
(43) Date of publication of application: 16.12.2015
(73) Proprietor: Intel Deutschland GmbH, 85579 Neubiberg (DE)
(72) Inventor: SUBRAMANIAN, Kumaran, 90491 Nürnberg (DE); GRUBER, Roland, 82054 Sauerlach (DE)
(74) Representative: Goddar, Heinz J.
(86) International application number: PCT/EP2014/050410
(87) International publication number: WO 2014/121975

(56) References cited:
- EP-A1- 1 494 394
- US-A1- 2007 167 174
- US-A1- 2012 021 725

## Description

### Technical Field

Various aspects relate to a communications device, a memory circuit, a method for indicating a deletion of information indicating a presence of a radio cell, and a method for deleting information indicating a presence of a radio cell.

### Background

Searching for a radio cell (e.g. a Closed Subscriber Group cell) and/or detecting a proximity of a radio cell may be required of a terminal in a radio communications network. The radio communications network may configure measurements (e.g. power measurements) and/or time slots in order to allow the terminal to search for and/or to detect the proximity of the radio cell. Accordingly, valuable network resources (e.g. power, time slot, frequency band, channel access codes, etc.) may be required by the terminal to search for and/or detect the proximity of a radio cell.

In an event where a search or a proximity detection is unsuccessful, there may be detrimental effects to the terminal and/or the radio communications network. For example, an unsuccessful attempt by the terminal to perform the aforementioned tasks may increase power consumption in the terminal, thus reducing the stand-by time of the terminal. In addition, an unsuccessful attempt by the terminal to perform the aforementioned tasks may increase power consumption in the terminal, thus reducing the stand-by time of the terminal. In addition, an unsuccessful attempt by the terminal may waste valuable network resources (e.g. time slot, frequency bandwidth, channel access code, etc.) of the radio communications network, which may otherwise have been allocated for other uses.

Accordingly, it may be desirable to improve the search and/or the proximity detection performed by a terminal. In turn, this may increase the stand-by time of the terminal, reduce power consumption in the terminal, and/or optimize the use of network resources (e.g. time slot, frequency bandwidth, channel access code, etc.) of a radio communications network.

US 2012/0021725 A1 relates to methods and arrangements that make CSG cell discovery more resource efficient. That is achieved by providing the UE with accurate and up-to-date knowledge of the physical cell identity (identities) of its allowed CSG cell(s). Accurate knowledge of the PCI of an allowed CSG cell greatly simplifies the search/discovery procedure for this CSG cell, in particular the procedure can be made much more resource efficient and UE battery lifetime can be prolonged.

US 2007/0167174 A1 shows a WIFI-enabled and GPS-enabled user device that executes a hotspot location utility, which enables the device to detect WIFI hotspots and update a locally-stored hotspot location database (LHLD) containing geographically-mapped hotspots. When a hotspot is detected, the device accesses the hotspot, retrieves identification information and usage terms from the hotspot, and measures performance metrics of the hotspot. The utility stores the identified hotspot with the current GPS coordinate as an entry within the LHLD. When a user later desires to locate hotspots within a particular geographic location, the user enters the physical address of the location, and hotspots with matching (or proximate) GPS coordinates of the entered address are presented to the user.

EP 1494394 A1 refers to a method for extending replicated service discovery information for determining the availability of requested remote services in a client/server-based network environment, wherein each of a multiplicity of client terminals is connected to a single file and/or application server of a specific service provider via a wireless multi-hop network which is based on a store-and-forward messaging principle, i.e. a wireless Personal Area Network (PAN) based on Bluetooth technology. Thereby, said service discovery information is needed for a selection of the optimal service provider. The method comprises the steps of providing network distance information indicating the number of intermediate network nodes acting as forwarding servers for accessing remotely accessible services between a client terminal and a number of file and/or application servers within said wireless multi-hop network and selecting a requested remote service running on a file and/or application server of a specific service provider at a network distance in the physical proximity of the respective client terminal which can be reached from said client terminal with a minimum of forwarding delay based on said network distance information.

### Summary

The invention is defined by the subject matter of the independent claims. Advantageous embodiments are subject to the dependent claims. The embodiments and/or examples of the following description which are not covered by the appended claims are considered as not being part of the present invention.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects of the invention are described with reference to the following drawings, in which:
FIG. 1 shows a communications system.
FIG. 2A to FIG. 2C show schematic views of a radio cell served by a node, and another cell including a network component and a terminal.
FIG. 3 shows a list including an identity of at least one allowed radio cell, and an identity of a PLMN (Public Land Mobile Network) the at least one allowed radio cell belongs to.
FIG. 4 shows a list including information indicating a presence of the at least one allowed radio cell.
FIG. 5 shows an updated list including an update to at least one of an identity of at least one allowed radio cell, an identity of a PLMN (Public Land Mobile Network) the at least one allowed radio cell belongs to, and information indicating a presence of the at least one allowed radio cell.
FIG. 6 shows a communications device.
FIG. 7 shows a list including timing information including a collection timestamp and an update timestamp.
FIG. 8 shows a list including timing information including a collection timestamp and a deletion time.
FIG. 9 shows a list including a collection timestamp and a trigger flag.
FIG. 10 shows a memory circuit.
FIG. 11 shows a method for indicating a deletion of information indicating a presence of a radio cell.
FIG. 12 shows a method for deleting information indicating a presence of a radio cell.

### Description

The following detailed description refers to the accompanying drawings that show, by way of illustration, specific details and aspects in which the invention may be practised. These aspects are described in sufficient detail to enable those skilled in the art to practice the invention. Other aspects may be utilized and structural, logical, and electrical changes may be made without departing from the scope of the invention. The various aspects are not necessarily mutually exclusive, as some aspects can be combined with one or more other aspects to form new aspects. Various aspects are described for structures or devices, and various aspects are described for methods. It may be understood that one or more (e.g. all) aspects described in connection with structures or devices may be equally applicable to the methods, and vice versa.

The word "exemplary" is used herein to mean "serving as an example, instance, or illustration". Any aspect or design described herein as "exemplary" is not necessarily to be construed as preferred or advantageous over other aspects or designs.

The term "radio communications network" is used herein to refer to a radio communications system configured in accordance with the network architecture of any one of, or any combination of, WLAN (wireless local area network), WiFi, Bluetooth, LTE (Long Term Evolution) cellular communications technology, UMTS (Universal Mobile Telecommunications System) cellular communications technology which may include the system enhancement HSPA (High Speed Packet Access), GSM (Global System for Mobile Communications) cellular communications technology which may include system enhancements General Packet Radio System (GPRS) and Enhanced Data rates for GSM Evolution (EDGE) and CDMA2000 (Code Division Multiple Access) cellular communications technology, although other radio communications technology may be possible as well.

The terms "radio communications network", "network", "radio network", "cellular network", "radio network communications system", "cellular network communications system", "cellular radio communications technology", "cellular communications system" and "radio communications system" may refer to the same logical entity and may be used interchangeably throughout the entire description.

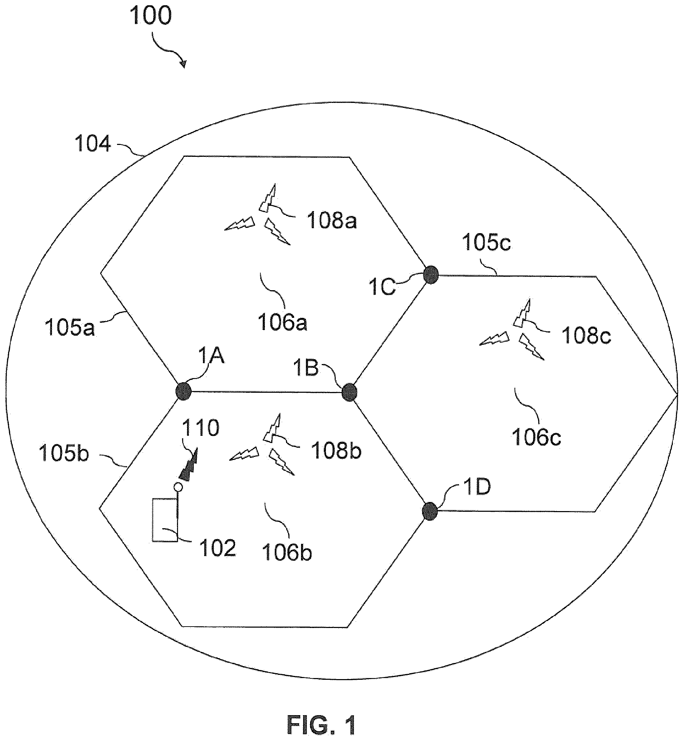

FIG. 1 shows a communications system 100.

The communications system 100 may include a terminal 102 and at least one network component 106a, 106b, 106c, which may be part of a radio communications network 104. In other words, the at least one network component 106a, 106b, 106c may be a component of the radio communications network 104.

Only one terminal 102 is shown is shown as an example, however the number of terminals may be greater than one, and may, for example, be two, three, four, five, six, seven, eight, nine, or on the order of tens, hundreds of, or even more terminals. In like manner, only three network components 106a, 106b, 106c are shown as an example, however the number of network components may be one, two and may be more, for example, four, five, six, seven, eight, nine, or on the order of tens, hundreds of, or even more network components.

The communications system 100 and/or the radio communications network 104 may be configured in accordance with the network architecture of any one of, or any combination of, WLAN (wireless local area network), WiFi, Bluetooth, LTE (Long Term Evolution) cellular communications technology, UMTS (Universal Mobile Telecommunications System) cellular communications technology, GSM (Global System for Mobile Communications) cellular communications technology, and CDMA2000 (Code Division Multiple Access) cellular communications technology, although other cellular communications technology may be possible as well.

The terminal 102 may include, or may be, a UE (user equipment) equipped with a SIM (Subscriber Identity Module) running on a UICC (Universal Integrated Circuit Card), a computer (e.g. a laptop equipped with, for example, a wireless radio connection, such as, for example, WiFi and/or Bluetooth), or any other equipment that may be configured to connect to a radio communications network.

The terminal 102 (e.g. a UE) may be within the area of coverage of the radio communications network 104, such as, for example, a PLMN (Public Land Mobile Network). The area of coverage of the radio communications network 104 may be the aggregate result of the coverage of the at least one network component 106a, 106b, 106c (e.g. at least one base station, NB (Node B), eNB (Evolved Node B), Home NB, traditional NB, etc.) of the radio communications network 104. In other words, each network component of the at least one network component 106a, 106b, 106c of the radio communications network 104 may have its respective area of coverage, and an aggregation of the respective areas of coverage may determine the area of coverage of the radio communications network 104. By way of an example, the area of coverage (which may also be referred to as " the region of coverage") of the radio communications network 104 shown in FIG. 1 may at least be the aggregate result of the coverage of the network components 106a, 106b, and 106c, and other network components belonging to the radio communications network 104 (other network components (e.g. base stations) are not shown in FIG. 1).

In FIG. 1, the at least one network component 106a, 106b, and 106c (e.g. base station) may be configured to transmit a downlink (DL) signal at a particular power. A downlink (DL) may refer to a connection from at least one of the network components 106a, 106b, 106c of the radio communications network 104 towards the terminal 102. Accordingly, a DL signal may include, or may be, a signal transmitted from the at least one network component 106a, 106b, 106c (e.g. base station) to the terminal 102 (e.g. a UE). By way of an example, the network component 106a may be configured to transmit a DL signal 108a; the network component 106b may be configured to transmit a DL signal 108b; and the network component 106c may be configured to transmit a DL signal 108c. The DL signals 108a, 108b, 108c transmitted by the at least one network component 106a, 106b, and 106c may, for example, cover a particular geographical area.

The geographical area covered by a network component (i.e. the region of coverage of a network component) of the at least one network component 106a, 106b, or 106c may be substantially (namely, approximately) represented by a cell (which may also be referred to as a "radio cell"). By way of an example, the region of coverage of the network component 106a may be substantially represented by a cell 105a; the region of coverage of the network component 106b may be substantially represented by a cell 105b; and the region of coverage of the network component 106c may be substantially represented by a cell 105c. Accordingly, the region of coverage of the radio communications network 104 may be represented by at least one cell, or by a tessellation of two or more cells, where each cell may be an approximation of the area of coverage of a network component (e.g. base station) of the radio communications network 104. By way of an example, area of coverage of the radio communications network 104 may represented by the tessellation of cells 105a, 105b, and 105c.

Each of, or any one of, the cells 105a, 105b, and 105c may, for example, be a macrocell, for example a cell having a range of less than or equal to about 40 kilometers, for example less than or equal to about 35 kilometers, for example less than or equal to about 30 kilometers, for example less than or equal to about 28 kilometers, for example less than or equal to about 25 kilometers, for example less than or equal to about 18 kilometers, for example less than or equal to about 10 kilometers, for example less than or equal to about 5 kilometers, for example less than or equal to about 3 kilometers, for example about 2 kilometers, although other ranges may be possible as well.

Whilst a respective cell 105a, 105b, 105c may be an approximation of the area of coverage of a respective network component 106a, 106b, 106c, there may be geographical regions that may be served by more than one network component. By way of an example, the geographical region on either side of a boundary formed by a line joining points 1A and 1B shown in FIG. 1 may be served by the network component 106a or the network component 106b, or both; the geographical region on either side of a boundary formed by a line joining points 1B and 1C may be served by the network component 106a or the network component 106c, or both; and the geographical region on either side of a boundary formed by a line joining points 1B and 1D may be served by the network component 106b or the network component 106c, or both,

As shown in FIG. 1, the terminal 102 (e.g. a UE) may, for example, be located within the region of coverage of the network component 106b. The terminal 102 may be initially switched off, namely, powered down. Alternatively, the terminal 102 may already be switched on, namely, powered up.

When the terminal 102 is initially switched off, there may be no connection between the terminal 102 and the radio communications network 104. For example, there may not exist a connection between the terminal 102 and the network component 106b (or any of the other network components 106a, 106c) shown in FIG. 1 when the terminal 102 is powered down. Accordingly, a terminal 102 that is switched off may not have connectivity to a communications service and/or network resource (e.g. time slot, frequency bandwidth, channel access code, etc.) delivered by the radio communications network 104 and/or the network component 106b.

However, when the terminal 102 is turned on within and/or near the area of coverage of the radio communications network 104, the terminal 102 may search for and/or identify and/or select a network component of the at least one network component 106a, 106b, 106c of the radio communications network 104. By searching for and/or identifying and/or selecting a network component (e.g. a base station), the terminal 102 may establish a communications connection with the radio communications network 104. For example, the terminal 102 may search for and/or identify and/or select the network component which may be nearest (e.g. in closest proximity) to it. By way of an example, the terminal 102 may search for and/or identify and/or select the network component 106b (which is shown in FIG. 1 to be the nearest network component to the terminal 102) in order to establish a communications connection with the radio communications network 104.

The terminal 102 may search for and/or identify and/or select a network component of the at least one network component 106a, 106b, 106c by, for example, monitoring, receiving and/or processing at least one DL signal 108a, 108b, 108c. For example, the terminal 102 may measure the power of at least one DL signal 108a, 108b, 108c of the at least one network component 106a, 106b, 106c in order to establish a new connection and/or to maintain an existing connection with the radio communications network 104. By way of an example, the terminal 102 shown in FIG. 1 may be measure the power of any one of, or any combination of, DL signals 108a, 108b, and 108c.

Since the area of coverage of a network component of the at least one network component 106a, 106b, 106c may be represented as a cell, searching for and identifying and/or selecting a network component may be illustratively viewed as searching for and/or identifying and/or selecting a cell to latch onto. As used herein, latching onto (or camping to) a cell may refer to the terminal 102 establishing at least one communications channel with the network component serving the cell. By way of an example, the terminal 102 shown in FIG. 1 may latch onto the cell 105b, and may therefore establish at least one communications channel with the network component 106b (e.g. base station). Since the network component 106b may be a part of the radio communications network 104, establishing at least one communications channel with the network component 106b may also mean that at least one communications channel is established with the radio communications network 104. The at least one communications channel established by the terminal 102 may include a channel for an uplink (UL) signal 110 and/or a channel for the DL signal 108b. An uplink (UL) may refer to a connection from the terminal 102 towards at least one network component (e.g. the network component 106b) of the radio communications network 104. Accordingly, the UL signal 110 may include, or may be, a signal transmitted from the terminal 102 (e.g. a UE) to at least one network component (e.g. the network component 106b, for example a base station) of the radio communications network 104. Since establishing at least one communications channel (e.g. with the radio communications network 104) may, for example, be important for connectivity of the terminal 102, performing network search and/or identification and/or selection (e.g. cell search and/or identification and/or selection) may be a critical task for the terminal 102.

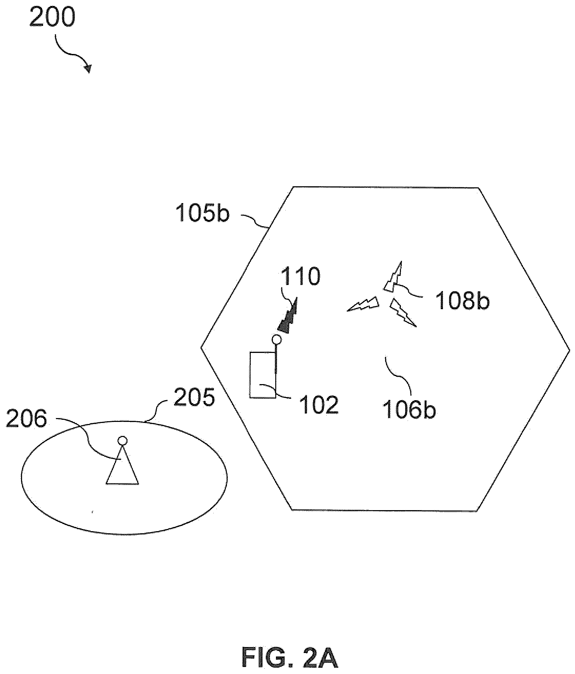

FIG. 2A to FIG. 2C show schematic views of a radio cell 205 served by a node 206, and the cell 105b of the radio communications network 104 including the network component 106b and the terminal 102.

The radio cell 205 may, for example, be a part of the radio communications network 104 shown in FIG. 1. In other words, the radio cell 205 may belong to the radio communications network 104. For example, the node 206 serving the radio cell 205 and the network component 106b may share the same PLMN. However, in another example, the radio cell 205 may be part of a radio communications network that is separate from (e.g. not a part of) the radio communications network 104 shown in FIG. 1. Stated in another way, the radio cell 205 may not belong to the radio communications network 104 shown in FIG. 1. For example, the node 206 serving the radio cell 205 and the network component 106b may not be part of the same PLMN.

The radio cell 205 may, for example, be a macrocell, for example a cell having a range of less than or equal to about 40 kilometers, for example less than or equal to about 35 kilometers, for example less than or equal to about 30 kilometers, for example less than or equal to about 28 kilometers, for example less than or equal to about 25 kilometers, for example less than or equal to about 18 kilometers, for example less than or equal to about 10 kilometers, for example less than or equal to about 5 kilometers, for example less than or equal to about 3 kilometers, for example about 2 kilometers, although other ranges may be possible as well.

The radio cell 205 may, for example, be a microcell, for example a cell having a range of less than or equal to about 2 kilometers, for example less than or equal to about 1.5 kilometers, for example less than or equal to about 1 kilometers, for example less than or equal to about 800 meters, for example less than or equal to about 500 meters, for example less than or equal to about 300 meters, for example about 200 meters, although other ranges may be possible as well.

The radio cell 205 may, for example, be a picocell, for example a cell having a range of less than or equal to about 200 meters, for example less than or equal to about 150 meters, for example less than or equal to about 100 meters, for example less than or equal to about 80 meters, for example less than or equal to about 50 meters, for example less than or equal to about 30 meters, for example about 10 meters, although other ranges may be possible as well.

The radio cell 205 may, for example, be a femtocell, for example a cell having a range of less than or equal to about 10 meters, for example less than or equal to about 7 meters, for example less than or equal to about 5 meters, for example less than or equal to about 3 meters, for example less than or equal to about 1 meter, for example less than or equal to about 50 centimeters, for example about 40 centimeters, although other ranges may be possible as well.

The node 206 serving the radio cell 205 may, for example, be a base station, a wireless router, a NB (Node B), a Home NB, a traditional NB, and an eNB (Evolved Node B), although other types of nodes may be possible as well.

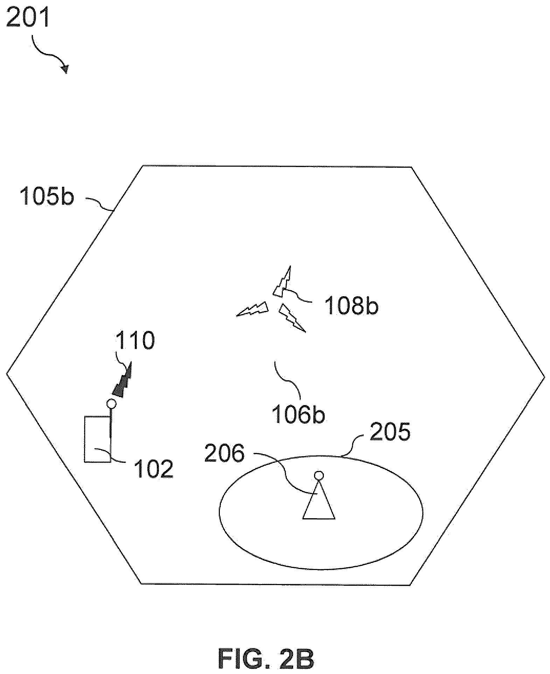

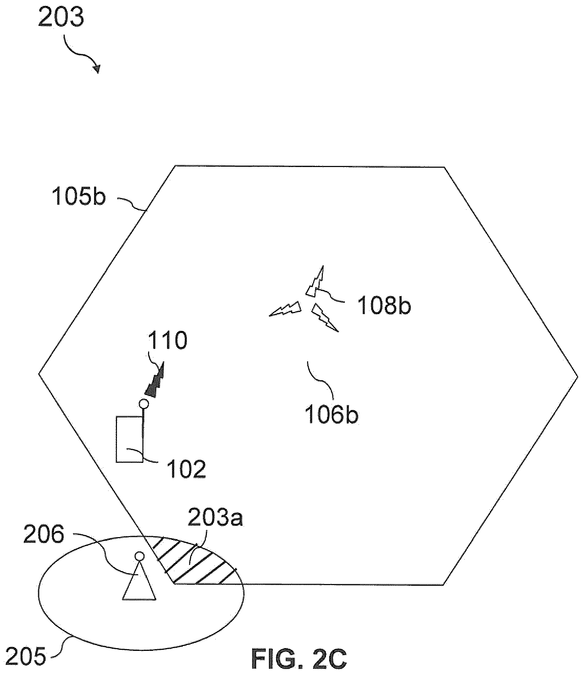

As shown in FIG. 2A in a view 200, the region of coverage of the radio cell 205 may, for example, be separate from (e.g. may not overlap with) the region of coverage of the cell 105b. In another example shown in FIG. 2B in a view 201, the region of coverage of the radio cell 205 may be included in the region of coverage of the cell 105b. In other words, the region of coverage of the cell 105b may completely overlap the region of coverage of the cell 205. In yet another example shown in FIG. 2C in a view 203, the region of coverage of the cell 105b may partially overlap the region of coverage of the cell 205 (the region of overlap in FIG, 2C is indicated by shaded region 203a).

The schematic views shown in FIG. 2A to FIG. 2C are examples, and the region of coverage of the radio cell 205 is shown to be smaller than the region of coverage of the cell 105b. However, this may not be the case in other examples. In other words, the region of coverage of the radio cell 205 may be greater than or equal to the region of coverage of the cell 105b.

The radio cell 205 may include, or may be, a CSG (Closed Subscriber Group) cell. In other words, the radio cell 205 may restrict connectivity to a communications service and/or network resource (e.g. time slot, frequency bandwidth, channel access code, etc.) delivered by it to a selected group of terminals. The selected group of terminals allowed to connect to the radio cell 205 may, for example, be referred to as a group of subscribed terminals, which may include at least one subscribed terminal. By way of an example, the terminal 102 shown in FIG. 2A to FIG. 2C may be a subscribed terminal of the radio cell 205. In other words, the terminal 102 may be allowed to connect to the radio cell 205 in order to, for example, use a communications service and/or network resource (e.g. time slot, frequency bandwidth, channel access code, etc.) offered by the radio cell 205.

The group of subscribed terminals may be known to the radio cell 205 in order for the radio cell 205 to regulate or control access to its communications services and/or network resource (e.g. time slot, frequency bandwidth, channel access code, etc.). For example, an identity of each subscribed terminal of the group of subscribed terminals may, for example, be included in an ACL (Access Control List). The ACL may, for example, be known to (e.g. stored in a memory of) the radio cell 205. The identity of each subscribed terminal of the group of subscribed terminals may include, or may be, an IMSI (International Mobile Subscriber Identity) and/or a TMSI (Temporary Mobile Subscriber Identity) of the subscribed terminal (e.g. terminal 102), although other identifiers of the subscribed terminal may be possible as well.

In like manner, a terminal (e.g. the terminal 102) may know the radio cells to which it is subscribed. For example, the terminal 102 may know that it is subscribed to the radio cell 205, and possibly to more radio cells. To the subscribed terminal, a radio cell which it may access may be seen as "an allowed radio cell". For example, to the terminal 102, the radio cell 205 shown in FIG. 2A to FIG. 2C may be considered an allowed radio cell. An identity of each allowed radio cell may, for example, be included in a list known to the terminal. In other words, an identity of each radio cell the terminal (e.g. the terminal 102) is allowed to access may be included in a list which the terminal has access to. The list may, for example, be stored in a memory of the terminal. The list may, for example, be referred to as "a whitelist".

The radio cell 205 may include, or may be, a hybrid cell. In other words, the radio cell 205 may provide open (e.g. unrestricted) access to all terminals wanting to connect to a communications service and/or network resources (e.g. time slot, frequency bandwidth, channel access code, etc.) delivered by it, but may also act like a CSG cell. For example, subscribed terminals (e.g. the terminal 102) may be prioritized compared to unsubscribed terminals and may be charged for the service and/or network resource (e.g. time slot, frequency bandwidth, channel access code, etc.) differently compared to unsubscribed terminals. For example, a hybrid cell may broadcast a CSG indicator which is set to false, and yet broadcasts a CGI (Closed Subscriber Group ID) to subscribed terminals.

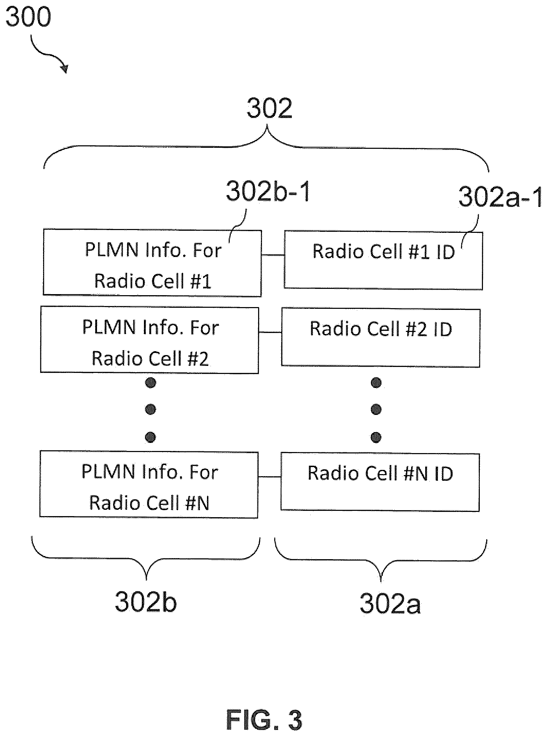

FIG. 3 shows a list 300 including an identity 302a of at least one allowed radio cell, and an identity 302b of a PLMN the allowed radio cell belongs to.

The list 300 may, for example, be a list (e.g. a whitelist) stored in a memory of a terminal (e.g. a UE). For example, the list 300 may be stored in a memory of the terminal 102 shown in FIG. 1 and FIG. 2A to FIG. 2C. The list 300 may include a description 302 of at least one allowed radio cell. For example, the list 300 shown in FIG. 3 includes a description 302 of each of the N radio cells the terminal is allowed to connect to. The description 302 of the at least one allowed radio cell may include an identity 302a of an allowed radio cell (indicated as "Radio Cell ID" in FIG. 3). The identity 302a of the at least one allowed radio cell may include, or may be, a SSID (Service set identification) of an allowed radio cell, although other identifiers of the at least one allowed radio cell may be possible as well. The identity 302a of the at least one allowed radio cell may be included in the list 300 (e.g. a whitelist) and may be stored in a terminal once the terminal visits an allowed radio cell. In other words, the list 300 may include an identity of a previously visited allowed radio cell.

The description 302 of the at least one allowed radio cell may include an identity 302b of a PLMN the allowed radio cell belongs to. The identity 302b of the PLMN may include, or may be, a MCC (Mobile Country Code) and/or a MNC (Mobile Network Code) of the PLMN to which the allowed radio cell belongs, although other identifiers of the PLMN may be possible as well.

By way of an illustration, the terminal 102 may be subscribed to the radio cell 205 shown in FIG. 2A to FIG. 2C. Accordingly, an identity of the radio cell 205 and an identity of the PLMN to which the radio cell 205 belongs may be stored in the list 300. For example, the identity 302a-1 of radio cell #1 may be identified with the identity of the radio cell 205, and the identity 302b-1 of the PLMN to which radio cell #1 belongs may be identified with the identity of the PLMN to which radio cell 205 belongs.

As described above, a terminal (e.g. terminal 102) may establish a communications connection with the radio communications network 104 (e.g. by searching and/or identifying and/or selecting a network component of the radio communications network 104). In like manner, a terminal (e.g. the terminal 102) may establish a communications connection with the radio cell 205 (e.g. a CSG and/or hybrid cell) by searching and/or identifying and/or selecting the node 206 serving the radio cell 205.

When the terminal (e.g. the terminal 102) is in an idle mode (e.g. in radio resource control (RRC) state RRC_IDLE in an LTE cellular network), the terminal 102 may use a search function (e.g. an autonomous search function) to select and/or reselect an allowed radio cell 205 in order to, for example, latch onto the radio cell 205. As described above, the list 300 (e.g. a whitelist) of the terminal 102 may include the identity of at least one previously visited allowed cell. Accordingly, the search function may, for example, detect a previously visited allowed radio cell 205 (e.g. a CSG cell and/or hybrid cell). According to the 3^{rd} Generation Partnership Project (3GPP), the terminal 102 may be required to use a search function (e.g. an autonomous search function) when the terminal 102 is in an idle mode. Whilst the requirement for the terminal 102 to use a search function (e.g. an autonomous search function) may be documented in 3GPP TS, the specific implementation of the search function is not specified by 3GPP. Therefore, the search function used by a terminal 102 in an idle mode to select and/or reselect the allowed radio cell 205 may vary from one terminal to another.

In contrast to allowed radio cell selection for a terminal 102 in an idle mode, a network controlled handover functionality may be required for a terminal 102 that may be in a connected mode (e.g. in radio resource control (RRC) state RRC_CONNECTED in an LTE cellular network). In other words, the terminal 102 may have already established a connection with the radio communications network 104 (e.g. using the network component 106b), and the radio communications network 104 may be required to control the handover of the terminal 102 from, for example, the cell 105b (e.g. a macrocell) to the allowed radio cell 205. Handover of the terminal 102 may include inbound handover and outbound handover. Inbound handover may refer to a handover of the terminal 102 from the cell 105b (e.g. a macrocell) to the allowed radio cell 205 (e.g. a CSG and/or hybrid cell). Outbound handover, on the other hand, may refer to a handover of the terminal 102 from the allowed radio cell 205 (e.g. a CSG and/or hybrid cell) to the cell 105b (e.g. a macrocell).

When the terminal 102 is in a connected mode (e.g. in RRC_CONNECTED state in an LTE cellular network) the terminal 102 may be required to send a proximity indication to the radio communications network 104 (e.g. macrocell) before handover to the allowed radio cell 205 (e.g. a CSG and/or hybrid cell) occurs. For example, the terminal 102 may send the proximity indication to the network component 106b (e.g. a base station). In other words, the terminal 102 may indicate to the radio communications network 104 (e.g. using the network component 106b) that it may be in close proximity to a radio cell 205 (e.g. a CSG and/or hybrid cell) whose identity (e.g. SSID) may be in the list 300 of allowed radio cells. According to the 3^{rd} Generation Partnership Project (3GPP), the terminal 102 may be required to send a proximity indicator to the radio communications network 104 when the terminal 102 is in a connected mode. Whilst the requirement for the terminal 102 to send a proximity indicator may be specified by 3GPP, the specific method used to detect the proximity of an allowed radio cell 205 (e.g. a CSG and/or hybrid cell) is not specified by 3GPP. Therefore, the method used to detect the proximity of an allowed radio cell 205 may vary from one terminal to another.

As described above, the specific methods for searching (e.g. for a terminal 102 in an idle mode) and/or detecting proximity (e.g. for a terminal 102 in a connected mode) may not be specified by 3GPP. However, these methods may be optimized by using information which may indicate a presence of an allowed radio cell 205 (e.g. a CSG and/or hybrid cell). If such information indicating the presence of an allowed radio cell 205 is available to the terminal 102, this information may then be used by the terminal 102 to search for an allowed radio cell 205 (e.g. a CSG and/or hybrid cell) and/or to detect the proximity of an allowed radio cell 205 (e.g. a CSG and/or hybrid cell).

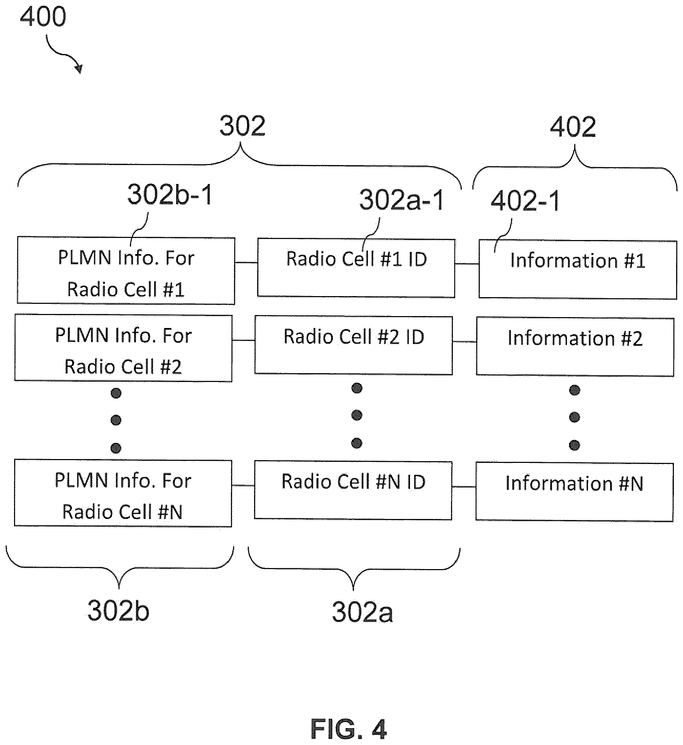

FIG. 4 shows a list 400 including information 402 indicating a presence of the at least one allowed radio cell.

Reference signs in FIG. 4 that are the same as in FIG. 3 denote the same or similar elements as in FIG. 3. Thus, those elements will not be described in detail again here; reference is made to the description above. Differences between FIG. 4 and FIG. 3 are described below.

The list 400 may include information 402 which may indicate a presence of the at least one allowed radio cell (e.g. a previously visited allowed radio cell). The list 400 may, for example, be stored in the terminal 102 (e.g. in a memory, for example a volatile and/or non-volatile memory, of the terminal 102). The information 402 may, for example, be referred to as fingerprint data. The information 402 (e.g. fingerprint data) may be used by the terminal 102 to search for an allowed radio cell 205 (e.g. a CSG and/or hybrid cell) and/or to detect the proximity of an allowed radio cell 205 (e.g. a CSG and/or hybrid cell).

As shown in FIG. 4, the information 402 (e.g. fingerprint data) included in list 400 may be stored in association with the identity 302a, 302b of the at least one allowed radio cell. For example, information 402-1, which may indicate a presence of an allowed radio cell #1 (e.g. a CSG cell), may be stored in association with the identity 302a-1 of the allowed radio cell #1, and the identity 302b-1 of the PLMN that the allowed radio cell #1 belongs to.

The information 402 may, for example, be collected by the terminal 102 when it visits the at least one allowed radio cell. For example, upon connection with a radio cell 205 (e.g. a CSG cell) which the terminal 102 is approved to access, the terminal 102 may collect information 402, and may store the information 402 in association with the identity 302a, 302b of the allowed radio cell 205 it has accessed.

The information 402 may, for example, include, or may be, information about the allowed radio cell 205. For example, the information 402 may include, or may be, a location (e.g. a location coordinate) of the allowed radio cell 205. By way of another example, the information 402 may include, or may be, a location (e.g. a location coordinate) of the node 206 serving the radio cell 205.

The information 402 may, for example, include, or may be, information about a cell other than the radio cell 205. For example, the information 402 may include, or may be, information about a neighboring cell (e.g. a neighboring macrocell and/or CSG cell). For example, the information 402 may include, or may be, configuration data of the cell 105b (e.g. a macrocell) and/or the network component 106b serving the cell 105b. By way of another example, the information 402 may include, or may be, a location (e.g. a location coordinate) of the network component 106b serving the cell 105b.

The abovementioned use of configuration data as input data for the information 402 may, in fact, be a basic requirement in 3GPP. For example, 3GPP may require that the information 402 includes, or is, for example, configuration data of at least one available cell, for example an available neighboring cell (e.g. an available neighboring macrocell, for example an available neighboring 3GPP macrocell). By way of another example, conformance tests in 3GPP may require and/or assume that the information 402 includes, or is, configuration data of the cell 105b (e.g. a macrocell).

The aforementioned examples of information 402 are not exhaustive. Accordingly, other types of data may be used as information 402 which may indicate a presence of the at least one allowed radio cell. In other words, it may be left to the terminal 102 to decide what data to collect to form the information 402. Furthermore, it may be left to the terminal 102 to implement the collection of such data. Stated in yet another way, it may not be specified in a standard (e.g. in 3GPP) what data to collect as the information 402 (e.g. fingerprint data) and/or how to collect such data and/or when to collect such data.

Since collection of input data that may form the information 402 may be left to terminal 102 implementation, there may not be a common agreed-upon procedure to update the information 402 (e.g. fingerprint data, for example CSG fingerprint data) that may have already been collected by the terminal 102. For example, a procedure used (e.g. in 3GPP) to update the information 402 may be for a radio communications network (e.g. an operator) to update at least one entry in the list 400 (e.g. at least one of entries 302a-1, 302b-1 and 402-1 pertaining to radio cell #1). The update may be performed, for example, by means of an OTA (Over-The-Air) procedure and/or an OMA (Open Mobile Alliance) DM (Device Management) procedure.

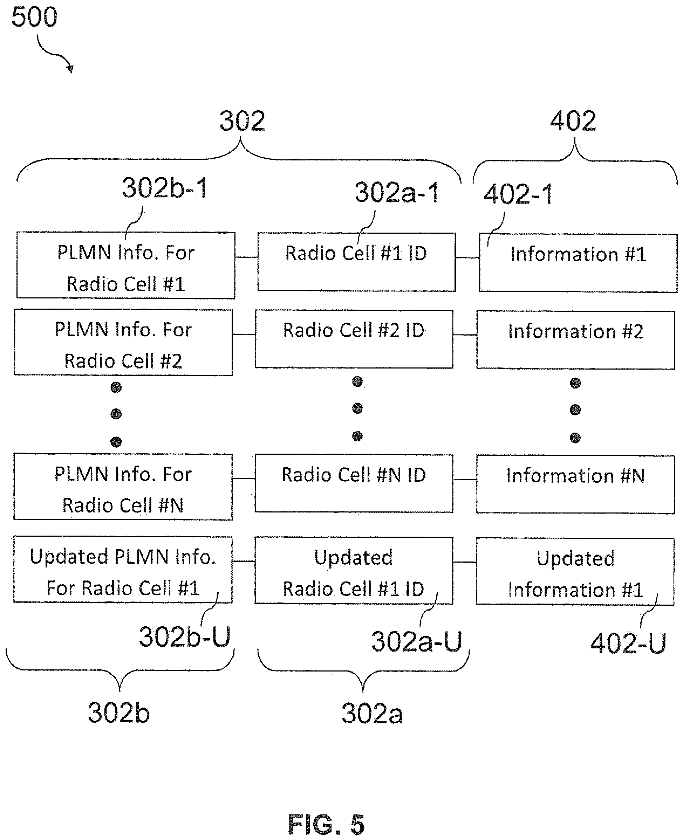

FIG. 5 shows an updated list 500 including an update to at least one of an identity 302a of at least one allowed radio cell, an identity 302b of a PLMN the at least one allowed radio cell belongs to, and information 402 indicating a presence of the at least one allowed radio cell.

Reference signs in FIG. 5 that are the same as in FIG. 4 denote the same or similar elements as in FIG. 4. Thus, those elements will not be described in detail again here; reference is made to the description above. Differences between FIG. 5 and FIG. 4 are described below.

As shown in FIG. 5, at least one entry of the list 400 shown in FIG. 4 may be updated by appending (e.g. adding) updated entries 302a-U, 302b-U, 402-U to the list 400. The at least one entry may, for example, be updated by a radio communications network (e.g. a network component of the radio communications network).

In the example shown in FIG. 5, the updated list 500 may include an update to the identity of the radio cell #1 (indicated as entry 302a-U) and/or an update to the identity of the PLMN (indicated as entry 302b-U) to which it belongs. The terminal 102 may, for example, update information 402 which may indicate the presence of radio cell #1 (indicated as entry 402-U in FIG. 5) in response to the update performed by the radio communications network. Alternatively, the radio communications network itself may update the information 402 which may indicate the presence of radio cell #1.

The update procedure described above in relation to FIG, 5 is an example, and there may be many other procedures available to update the information 402. In addition to the absence of a common agreed-upon procedure to update the information 402, there may not be a common agreed-upon procedure available to invalidate information 402 which may have already been collected by the terminal 102 that may be inaccurate. For example, in the example shown in FIG. 5, there may not be a procedure to delete entries 302a-1, 302b-1 and 402-1 which may be inaccurate due to the update 302a-U to the identity of the radio cell #1 and/or the update 302b-U to the identity of the PLMN to which it belongs and/or the update 402-U to the information which indicates the presence of radio cell #1. As a consequence, there may not be a clear, standardized definition of what may be considered as obsolete (e.g. outdated and/or invalid) information 402 (e.g. fingerprint data). Hence, there may not be a common agreed-upon procedure of when and/or how to delete such obsolete information 402 that may already have been collected by the terminal 102.

Use of obsolete (e.g. outdated and/or invalid) information 402 may, for example, have detrimental effects on the terminal 102 and/or a communications network (e.g. the radio communications network 104 shown in FIG. 1). For example, information 402 which may have been entered into the list 400 in the past may not be accurate at the present time. Accordingly, if the terminal 102 is in an idle mode (e.g. RRC_IDLE in an LTE cellular network), the terminal 102 may use the outdated information 402 (e.g. fingerprint data) to search for an allowed radio cell 205 (e.g. a CSG and/or hybrid cell). Since the information 402 may be outdated, the terminal 102 may waste energy (e.g. engage in wasteful battery consumption) whilst searching for an allowed radio cell 205 (e.g. a CSG and/or hybrid cell). This may, in turn, reduce a stand-by time of the terminal 102 (e.g. UE). By way of another example, if the terminal 102 is in a connected mode (e.g. RRC_CONNECTED in an LTE cellular network), the terminal 102 may use the outdated information 402 to detect the proximity of an allowed radio cell 205 (e.g. a CSG and/or hybrid cell). Use of such outdated information 402 to, for example, send a proximity indicator to the cell 105b in an attempt to locate the allowed radio cell 205, may waste network resources (e.g. time slot, frequency bandwidth, channel access code, etc.) of a radio communications network (e.g. the radio communications network 104). For example, the radio communications network 104 may use the outdated information 402 sent to it by the terminal 102 as part of the proximity indicator to configure measurements (e.g. power measurements) and/or gaps (e.g. time slots) in order to allow the terminal 102 to measure (e.g. measure power) of the allowed radio cell 205. Therefore, if the proximity indicator is sent by the terminal 102 based on outdated information 402 (e.g. fingerprint information), there may be wastage of valuable network resources (e.g. time slot, frequency bandwidth, channel access code, etc.).

Therefore, there may be a need to update and/or delete information 402 that may be obsolete (e.g. outdated and/or invalid) from the list 400, which may, for example, be stored in the terminal 102.

Updating and/or deleting information 402 that may be obsolete (e.g. outdated and/or invalid) may have an effect of increasing a stand-by time of a terminal.

Updating and/or deleting information 402 that may be obsolete (e.g. outdated and/or invalid) may have an effect of reducing power consumption in a terminal.

Updating and/or deleting information 402 that may be obsolete (e.g. outdated and/or invalid) may have an effect of optimizing the use of network resources (e.g. time slot, frequency bandwidth, channel access code, etc.) of a radio communications network and/or of a radio cell.

A communications device may be provided to update and/or delete information 402 shown in FIG. 4 and/or FIG. 5 that may be obsolete (e.g. outdated and/or invalid).

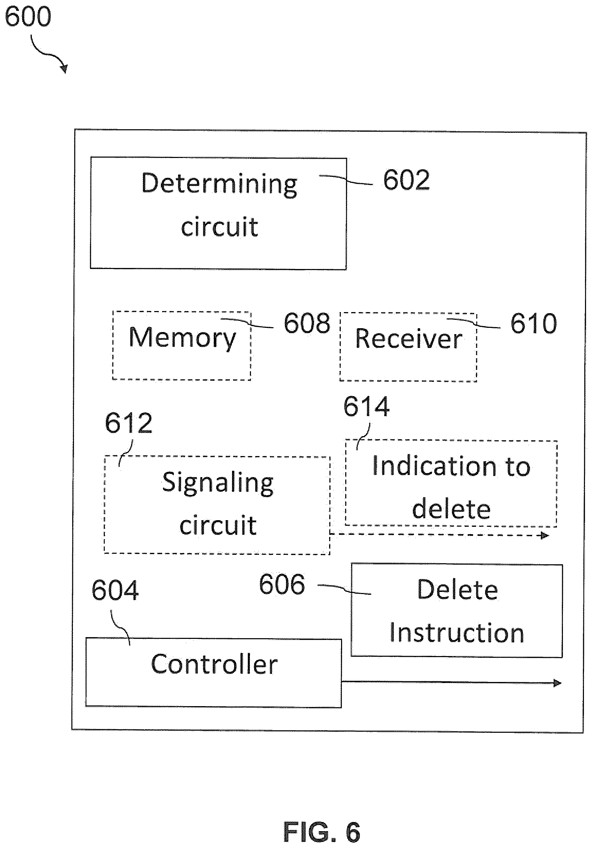

FIG. 6 shows a communications device 600.

The communications device 600 may, for example, be used to update and/or delete information 402 shown in FIG. 4 and/or FIG. 5 that may be obsolete (e.g. outdated and/or invalid).

The communications device 600 may include a determining circuit 602 and a controller 604.

The determining circuit 602 and/or the controller 604 may be implemented by means of a circuit. The word "circuit" is used herein to mean any kind of a logic implementing entity, which may be special purpose circuitry or processor executing software stored in a memory, firmware, or any combination thereof. Thus, in one or more examples, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be a processor executing software, e.g. any kind of computer program, e.g. a computer program using a virtual machine code such as e.g. Java. Different circuits can thus also be implemented by the same component, e.g. by a processor executing two different programs.

The determining circuit 602 may be configured to determine whether information (e.g. fingerprint data), which may indicate a presence of a radio cell, is outdated. The controller 604 may be configured to generate a delete instruction 606 in case the determining circuit 602 determines that the information (e.g. fingerprint data) is outdated. The delete instruction 606 may, for example, indicate that the information (i.e. outdated information) is to be deleted.

Illustratively, as described above in relation to FIG. 5, the entry 402-1 may indicate a presence of a radio cell #1 (e.g. the radio cell 205). The determining circuit 602 of the communications device 600 may be configured to determine whether entry 402-1 is outdated. In case the entry 402-1 is determined to be outdated (e.g. due to updated entry 402-U), the controller 604 of the communications device 600 may be configured to generate the delete instruction 606, which may indicate that the entry 402-1 is to be deleted.

The communications device 600 may, for example, be a terminal (e.g. the terminal 102, for example, a UE). By way of another example, the communications device 600 may be a network component of a cell of a radio communications network (e.g. the network component 106b (e.g. a base station) of the cell 105b). Each of these examples are discussed in the description that follows.

As mentioned above, the communications device 600 may be a terminal (e.g. a UE). As described above in relation to FIG. 4 and FIG. 5, the lists 400 and 500 may be stored in the memory of a terminal (e.g. the terminal 102). Accordingly, the communications device 600 (e.g. a terminal) may include a memory 608, which may store information (e.g. fingerprint data) which may indicate a presence of a radio cell (e.g. a CSG and/or hybrid cell).

The communications device 600 (e.g. a terminal) may be subscribed to the radio cell (e.g. the CSG and/or hybrid cell) whose presence is indicated by the information. In other words, the radio cell (e.g. the CSG and/or hybrid cell) may be an allowed radio cell of the communications device 600. The determining circuit 602 of the communications device 600 (e.g. a terminal) may be configured to determine whether the information is outdated based on timing information.

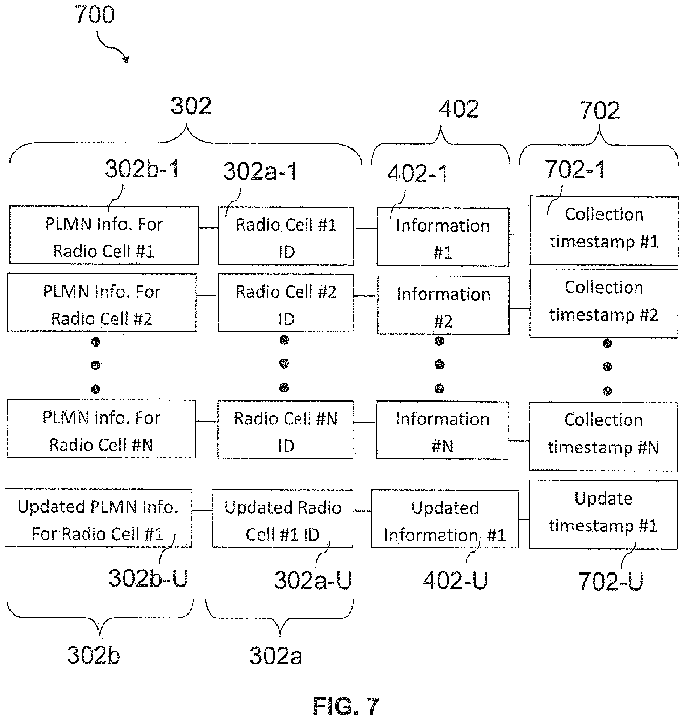

FIG. 7 shows a list 700 including timing information 702 including a collection timestamp 702-1 and an update timestamp 702-U.

Reference signs in FIG. 7 that are the same as in FIG. 5 denote the same or similar elements as in FIG. 4. Thus, those elements will not be described in detail again here; reference is made to the description above. Differences between FIG. 7 and FIG. 5 are described below.

The list 700 shown in FIG. 7 may be stored in a memory, for example, in the memory 608 of the communications device 600.

As shown in FIG. 7, the timing information 702 included in list 700 may be stored in association with the identity 302a, 302b of the at least one allowed radio cell and the information 402 indicating the presence of the at least one allowed radio cell. For example, the collection timestamp 702-1 may be stored in association with the identity 302a-1 of the allowed radio cell #1, the identity 302b-1 of the PLMN that the allowed radio cell #1 belongs to, and the information 402-1 indicating the presence of the allowed radio cell #1.

The timing information 702 may include the collection timestamp 702-1. The collection timestamp 702-1 may, for example, indicate a time at which the information 402 is collected. For example, the collection timestamp 702-1 shown in FIG. 7 may indicate when (e.g. at what point in time) the information 402-1 indicating the presence of radio cell #1 is collected.

As described above in relation to FIG. 5, the updated list 500 may include an update to the identity of an allowed radio cell (e.g. entry 302a-U) and/or an update to the identity of the PLMN to which it belongs (e.g. entry 302b-U) and/or an update to the information indicating the presence of the allowed radio cell (e.g. entry 402-U). In this regard, the timing information 702 may include the update timestamp 702-U. The update timestamp 702-U may, for example, indicate a time at which an entry pertaining to a particular allowed radio cell is updated. For example, in the example shown in FIG. 7, the update timestamp 702-U may indicate when the information 402-U indicating the presence of radio cell #1 is updated.

The update timestamp 702-U may, for example, be determined by the communications device 600 (e.g. a terminal). For example, the communications device 600 may generate the update timestamp 702-U when there is an update to at least one of the following: the identity of an allowed radio cell (e.g. entry 302a-U), the identity of the PLMN to which it belongs (e.g. entry 302b-U), and the information of a particular allowed radio cell (e.g. entry 402-U). Alternatively, or in addition to the above, the update timestamp 702-U may, for example, be provided by a network device of a radio communications network. The network device (e.g. a base station) may provide the update timestamp 702-U to the communications device 600 when at least one of the above-mentioned entries are updated (e.g. by the radio communications network of which the network device is a part of). The communications device 600 (e.g. a terminal) may receive the update timestamp 702-U from the network device by means of a receiver 610 included in the communications device 600.

The determining circuit 602 of the communications device 600 (e.g. a terminal) may compare the update timestamp 702-U with the collection timestamp 702-1. In case the collection timestamp 702-1 is determined to be older than the update timestamp 702-U, the information 402-1 may be determined to be outdated. In other words, the information 402-1 may be determined to be outdated (e.g. obsolete) if the update timestamp 702-U is more current than the collection timestamp 702-1. Upon determination by the determining circuit 602 that the information 402-1 is outdated, the controller 604 may generate the delete instruction 606, which may indicate that the outdated information 402-1 is to be deleted, for example, from the memory 608 of the communications device 600 (e.g. a terminal).

In summary, an update to information indicating the presence of a particular allowed radio cell (e.g. updated information 402-U) may trigger the determining circuit 602 of the communications device 600 to compare the collection timestamp 702-1 of the information 402-1 to the update timestamp 702-U of the updated information 402-U. Based on the result of the comparison (e.g. collection timestamp 702-1 being older than the update timestamp 702-U), the controller 604 may trigger generation of the delete instruction 606 which may indicate that the outdated information 402-1 is to be deleted.

Therefore, the procedure described above in relation to FIG. 7 may be used to update and/or delete information 402 that may be obsolete (e.g. outdated and/or invalid) from a list (e.g. a whitelist) which may, for example, be stored in communications device (e.g. a terminal).

An effect of the procedure described above in relation to FIG. 7 may be increase of stand-by time of a terminal.

An effect of the procedure described above in relation to FIG. 7 may be reduction of power consumption in a terminal.

An effect of the procedure described above in relation to FIG. 7 may be optimization of the use of network resources (e.g. time slot, frequency bandwidth, channel access code, etc.) of a radio communications network and/or of a radio cell.

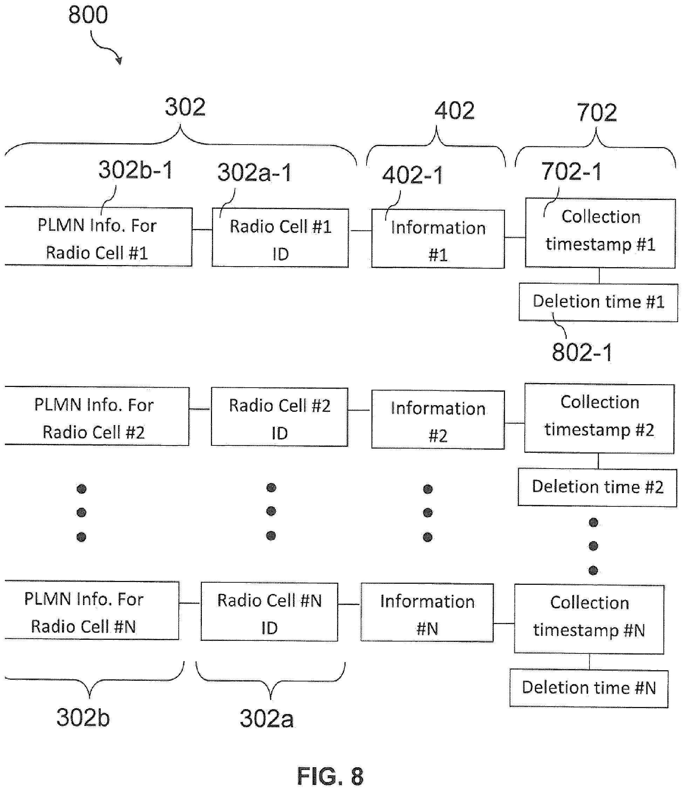

FIG. 8 shows a list 800 including timing information 702 including a collection timestamp 702-1 and a deletion time 802-1.

Reference signs in FIG. 8 that are the same as in FIG. 7 denote the same or similar elements as in FIG. 7. Thus, those elements will not be described in detail again here; reference is made to the description above. Differences between FIG. 8 and FIG. 7 are described below.

The list 800 may include the deletion time 802-1, which may indicate a time to delete the information 402-1. As shown in FIG. 8, the timing information 702 included in list 700 may be stored in association with the identity 302a, 302b of the at least one allowed radio cell and the information 402 indicating the presence of the at least one allowed radio cell. For example, the deletion time 802-1 may be stored in association with the collection timestamp 702-1, the identity 302a-1 of the allowed radio cell #1, the identity 302b-1 of the PLMN that the allowed radio cell #1 belongs to, and the information 402-1 indicating the presence of the allowed radio cell #1.

The deletion time 802-1 may include, or may be, an expiry time of the information 402-1 it (i.e. the deletion time 802-1) is stored in association with.

The determining circuit 602 of the communications device 600 (e.g. a terminal) may compare the deletion time 802-1 with the collection timestamp 702-1. In case the collection timestamp 702-1 is determined to be older than or equal to the deletion time 802-1, the information 402-1 may be determined to be outdated. For example, the information 402-1 may be determined to be outdated in case the collection timestamp 702-1 passes or is equal to an expiry time indicated by the deletion time 802-1. Upon determination by the determining circuit 602 that the information 402-1 is outdated, the controller 604 may generate the delete instruction 606, which may indicate that the outdated information 402-1 is to be deleted, for example, from the memory 608 of the communications device 600 (e.g. a terminal).

The deletion time 802-1 may, for example, be a default value that is used by the communications device 600 (e.g. a terminal). The default value may be specified by the communications device 600 itself, or may be specified by a radio communications network and thereafter specified to the communications device 600 by means of, for example, an OTA and/or OMA DM procedure.

In another example, the deletion time 802-1 may be a variable value which may depend on the identity 302a-1 of the allowed radio cell and/or on the identity 302b-1 of the PLMN to which the allowed radio cell belongs. As in the example of the default value, the variable value may be determined by the communications device 600 (e.g. by the determining circuit 602 of the communications device 600), or may be determined by a radio communications network and specified to the communications device 600 by means of, for example, an OTA and/or OMA DM procedure.

In yet another example, the deletion time 802-1 may include, or may be, a relative time value (e.g., counted in minutes/hours/days/etc. from a time when the timestamp 702-1 was received). In other words, the deletion time 802-1 may be measured (e.g. in minutes/hours/days/etc.) with respect to the timestamp 702-1.

In a further example, the deletion time 802-1 may include, or may be, an absolute time value. For example, the deletion time 802-1 may be specified by a date, for instance, encoded in a format such as Day-Month-Year (DD-MM-YYYY), or its variants. Alternatively, or in addition, the deletion time 802 may be specified by a time, for example, encoded in a format such as Hour-Minute-Second (HH-MM-SS), or its variants.

Therefore, the procedure described above in relation to FIG. 8 may be used to update and/or delete information 402 that may be obsolete (e.g. outdated and/or invalid) from a list (e.g. a whitelist) which may, for example, be stored in a terminal.

An effect of the procedure described above in relation to FIG. 8 may be increase of stand-by time of a terminal.

An effect of the procedure described above in relation to FIG. 8 may be reduction of power consumption in a terminal.

An effect of the procedure described above in relation to FIG. 8 may be optimization of the use of network resources (e.g. time slot, frequency bandwidth, channel access code, etc.) of a radio communications network and/or of a radio cell.

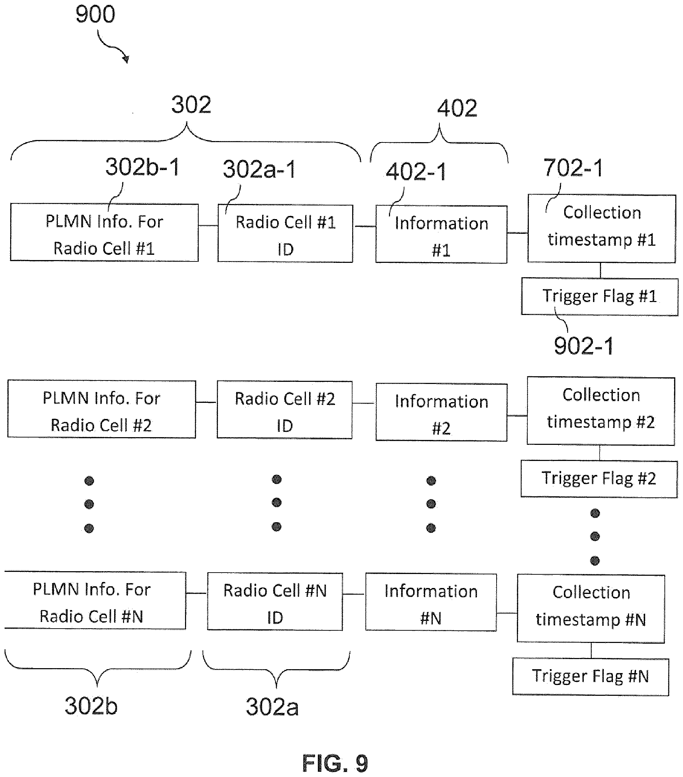

FIG. 9 shows a list 900 including a collection timestamp 702-1 and a trigger flag 902-1.

Reference signs in FIG. 9 that are the same as in FIG. 8 denote the same or similar elements as in FIG. 8. Thus, those elements will not be described in detail again here; reference is made to the description above. Differences between FIG. 9 and FIG. 8 are described below.

The list 900 may include the trigger flag 902-1. As shown in FIG. 9, the trigger flag 902-1 may be stored in association with the identity 302a, 302b of the at least one allowed radio cell and the information 402 indicating the presence of the at least one allowed radio cell. For example, the trigger flag 902-1 may be stored in association with the collection timestamp 702-1, the identity 302a-1 of the allowed radio cell #1, the identity 302b-1 of the PLMN that the allowed radio cell #1 belongs to, and the information 402-1 indicating the presence of the allowed radio cell #1.

The trigger flag 902-1 may, for example, trigger the determining circuit 602 of the communications device 600 (e.g. a terminal) to determine whether the information 402-1 is outdated. The trigger flag 902-1 may have to be set to generate such a trigger to the determining circuit 602.

The trigger flag 902-1 may be set in case there is a change in an environment of an allowed radio cell included in the list 900. For example, there may be a change in the identity 302a-1 of the allowed radio cell #1 and/or a change in the identity 302b-1 of the PLMN that the allowed radio cell #1 belongs to. By way of another example, there may be a change in the macro-cell environment of an allowed radio cell (e.g. a CSG and/or hybrid cell), and this change may cause the trigger flag 902-1 to be set. As described above, the communications device 600 may be a terminal. Accordingly, the trigger flag 902-1 may be set by a network component of a radio communications network. The trigger flag 902-1 may, for example, be set by means of a broadcast message (e.g. broadcast system information) by the network component of the radio communications network to the communications device 600. For example, an allowed radio cell included in the list 900 may be the radio cell 205 shown in FIG. 2A to FIG. 2C, and the trigger flag 902-1 may be set by at least one of the network components 106a, 106b and 106c of the radio communications network 104 by means of, for example, a broadcast message (e.g. system information).

Setting the trigger flag 902-1 using the broadcast message may be performed by using any existing values and/or fields included in the broadcast message (e.g. system information). Alternatively, or in addition to this, the trigger flag 902-1 may be set by the broadcast message by introducing additional (e.g. new) fields in the broadcast message (e.g. system information).

The broadcast message (e.g. system information) which may set the trigger flag 902-1 may include, for example, a time at which a change in the environment of the allowed radio cell occurred. The time at which the change in the environment of the allowed radio cell occurred may be referred to as a change timestamp (not shown in FIG. 9). The determining circuit 602 of the communications device 600 (e.g. a terminal) may compare the change timestamp broadcast by the network component with the collection timestamp 702-1. In case the collection timestamp 702-1 is determined to be older than the change timestamp, the information 402-1 may be determined to be outdated.

In summary, a network component of a radio communications network may trigger the determining circuit 602 of the communications device 600 (e.g. a terminal) to determine whether the information 402-1 is outdated by means of a trigger flag 902-1. In addition, the network component may provide a broadcast message (e.g. system information) that may include a change timestamp, which may be used by the determining circuit 602 to determine whether the information 402-1 is outdated. In this case, the controller 604 may generate the delete instruction 606, which may indicate that the outdated information 402-1 is to be deleted, for example, from the memory 608 of the communications device 600 (e.g. a terminal).

Therefore, the procedure described above in relation to FIG. 9 may be used to update and/or delete information 402 that may be obsolete (e.g. outdated and/or invalid) from a list (e.g. a whitelist) which may, for example, be stored in a terminal.

An effect of the procedure described above in relation to FIG. 9 may be increase of stand-by time of a terminal.

An effect of the procedure described above in relation to FIG. 9 may be reduction of power consumption in a terminal.

An effect of the procedure described above in relation to FIG. 9 may be optimization of the use of network resources (e.g. time slot, frequency bandwidth, channel access code, etc.) of a radio communications network and/or of a radio cell.

Whilst the lists shown in FIG. 7 to FIG. 9 and the accompanying procedures to update and/or delete information 402 that may be obsolete (e.g. outdated and/or invalid) from the lists were described separately, it may be possible to combine features of the lists and the accompanying procedures with each other. By way of one example, the list 800 shown in FIG. 8 may additionally include the trigger flag 902-1 shown in FIG. 9. In other words, the trigger flag 902-1 shown in FIG. 9 may be stored in association with deletion time 802-1 shown in FIG. 8. In such an example, the determining circuit 602 of the communications device 600 (e.g. a terminal) may be triggered by the setting of the trigger flag 902-1 to determine whether the information 402-1 is outdated. In response, the determining circuit 602 may determine whether the information 402-1 is outdated by comparing the collection timestamp 702-1 with the deletion time 802-1. In case the collection timestamp 702-1 is older than the deletion time 802-1, the controller 604 may be configured to generate the delete instruction 606, which may indicate that the outdated information 402-1 is to be deleted, for example, from the memory 608 of the communications device 600 (e.g. a terminal).

As described above, the communications device 600 may include, or may be, a network component of a radio communications network (e.g. network component 106b of the radio communications network 104 shown in FIG. 2A to FIG. 2C). For example, the network component may be a base station of a radio cell (e.g. a macrocell) other than an allowed radio cell included in any one of, or any combination of, the lists shown in FIG. 7 to FIG. 9.

As described above, the lists shown in FIG. 7 to FIG. 9, which may include information 402 and/or timing information 702, may be stored in a memory of a terminal. The communications device 600 (e.g. a network component) may have access to, or may have knowledge of, at least one of the lists 700, 800, 900 stored in the memory of the terminal, and the determining circuit 602 of the communications device (e.g. a network component) may be configured to determine whether the information 402 is outdated, for example, based on the timing information 702 stored in the memory of the terminal.

The determining circuit 602 of the communications device (e.g. a network component) may determine if the information 402 is outdated using any one of, or any combination of, the procedures described above in relation to FIG. 7 to FIG. 9. In case the determining circuit 602 determines that the information is outdated, the controller 604 may generate the delete instruction 606. Since a memory of the terminal may store the outdated information, the delete instruction 606 may indicate that the outdated information is to be deleted from the memory. The delete instuction 606 may be provided by the communications device 600 (e.g. a network component) to the terminal (e.g. a UE). Accordingly, the communications device 600 may include a signaling circuit 612. The word "circuit" is used herein to mean any kind of a logic implementing entity, which may be special purpose circuitry or processor executing software stored in a memory, firmware, or any combination thereof. Thus, in one or more examples, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be a processor executing software, e.g. any kind of computer program, e.g. a computer program using a virtual machine code such as e.g. Java. Different circuits can thus also be implemented by the same component, e.g. by a processor executing two different programs.

The signaling circuit 612 may, for example, be configured to signal (e.g. to the terminal) an indication 614 to delete the outdated information upon generation of the delete instruction 606 by the controller 604. In this regard, the signaling circuit 612 may, for example, include, or may be, a transmitter circuit. For example, the signaling circuit 612 may be configured to signal the deletion of the outdated information via a radio communications technology (e.g. CDMA 2000, LTE, etc.) to the terminal, which may include the memory which stores the outdated information.

The description has, for example, described that the controller 604 may generate the delete instruction that may indicate that the outdated information is to be deleted. Accordingly, there may still remain the need to delete the outdated information.

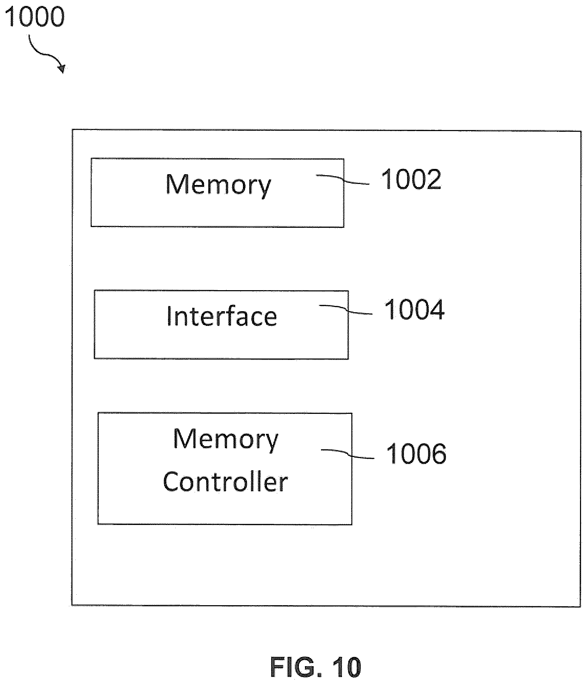

FIG. 10 shows a memory circuit 1000.

The memory circuit 1000 may, for example, be used with the communications device 600 to delete the outdated information. The memory circuit 1000 may, for example, be a part of a terminal (e.g. terminal 102, for example a UE).

The word "circuit" is used herein to mean any kind of a logic implementing entity, which may be special purpose circuitry or processor executing software stored in a memory, firmware, or any combination thereof. Thus, in one or more examples, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be a processor executing software, e.g. any kind of computer program, e.g. a computer program using a virtual machine code such as e.g. Java. Different circuits can thus also be implemented by the same component, e.g. by a processor executing two different programs.

The memory circuit 1000 may include a memory 1002, an interface 1004, and a memory controller 1006.

The memory 1002 may include, or may be, a non-volatile memory and/or a volatile memory. The memory 1002 may store information indicating a presence of a radio cell. For example, the memory 1002 may store information 402 shown in at least one of FIG. 7 to FIG. 9. By way of another example, the memory 1002 may additionally store an identity of at least one allowed radio cell, and an identity of a PLMN the allowed radio cell belongs to. For example, the memory 1002 may store the identity 302a of at least one allowed radio cell and/or the identity 302b of a PLMN the allowed radio cell belongs to shown in FIG. 7 to FIG. 9.

The interface 1004 may be configured to receive a delete instruction, for example, the delete instruction 606 shown in FIG. 6, which may indicate that the information is to be deleted. Upon receipt of the delete instruction from, for example, the communications device 600, the memory controller 1006 may be configured to delete the information from the memory 1002.

As described above, the communications device 600 may be a terminal. Accordingly, the memory circuit 1000 may, for example, be a part of the communications device 600. For example, the memory 608 shown in FIG. 6 may be identified with the memory 1002 shown in FIG. 10. Therefore, the memory circuit 1000 may be configured to receive the delete instruction from the controller 604, and the memory controller 1006 of the memory circuit 1000 may be configured to delete the information stored in the memory 608.

As described above, the communications device 600 may, for example, be a network component (e.g. a base station) of a radio communications system. Accordingly, the interface of the radio communications system may be configured to receive the delete instruction from a network component (e.g. a base station) of a radio communications sytem.

As described above, the memory circuit 1000 may, for example, be a part of a terminal (e.g. terminal 102, for example a UE). The information indicating the presence of a radio cell may be stored in the memory 1002 of the memory circuit 1000. Testing of the terminal may, for example, require that outdated information (e.g. fingerprint data) be deleted. This may, for example, be performed during test by means of a test command (e.g. an AT command). In other words, the delete instruction may include or may be a test command. The test command (e.g. AT command) may be used by a tester (e.g. test equipment) to clean the stored information for test purposes. In addition, the test command (e.g. an AT command) may provide a way for a user to request the deletion of outdated information (e.g. fingerprint data). The interface 1004 of the memory circuit 1000 may be configured to receive the delete instruction (e.g. test command) from the tester.

In addition to deletion of outdated information, a test command (e.g. an AT command) may be used to selectively delete information. For example, information (e.g. fingerprint data) of an allowed radio cell having a particular identity may be deleted. In addition, or alternatively, information (e.g. fingerprint data) stored in association with a PLMN having a particular identity may be deleted. In addition or alternatively, all information stored in the memory 1002 of the memory circuit may be deleted using the test command. Accordingly, the test command may partially or completely delete information indicating the presence of an allowed radio cell from the memory 1002 of the memory circuit 1000.

Therefore, the memory circuit 1000 shown in FIG. 10 may be used to delete information that may be obsolete (e.g. outdated and/or invalid) from a list (e.g. a whitelist) which may, for example, be stored in a terminal.

An effect provided by the memory circuit 1000 may be increase of stand-by time of a terminal.

An effect provided by the memory circuit 1000 may be reduction of power consumption in a terminal.

An effect provided by the memory circuit 1000 may be optimization of the use of network resources (e.g. time slot, frequency bandwidth, channel access code, etc.) of a radio communications network and/or of a radio cell.

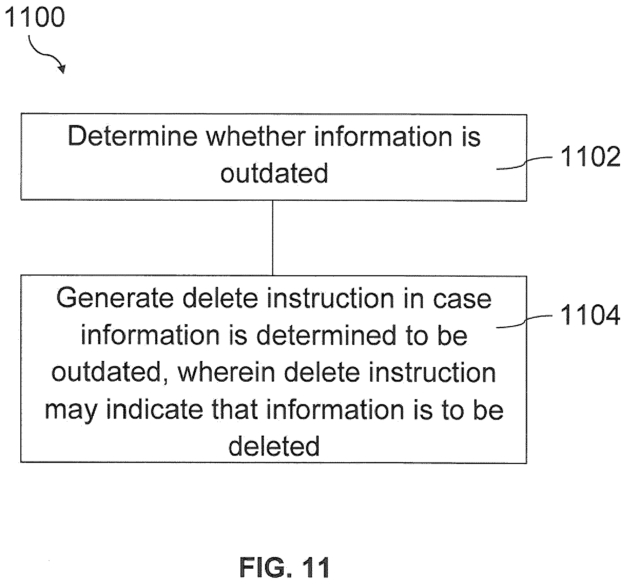

FIG. 11 shows a method 1100 for indicating a deletion of information indicating a presence of a radio cell.

The method 1100 may, for example, be used to update and/or delete information that may be obsolete (e.g. outdated and/or invalid) from a list (e.g. a whitelist) which may, for example, be stored in a terminal.

The method 1100 may include determining whether the information is outdated (in 1102); and generating a delete instruction in case the information is determined to be outdated, wherein the delete instruction indicates that the information is to be deleted (in 1104).

Determining whether the information is outdated (in 1102) may, for example, be performed using the determining circuit 602 described above in relation to FIG. 6. Generating a delete instruction in case the information is determined to be outdated (in 1104) may, for example, be performed using the controller 604 described above in FIG. 6.

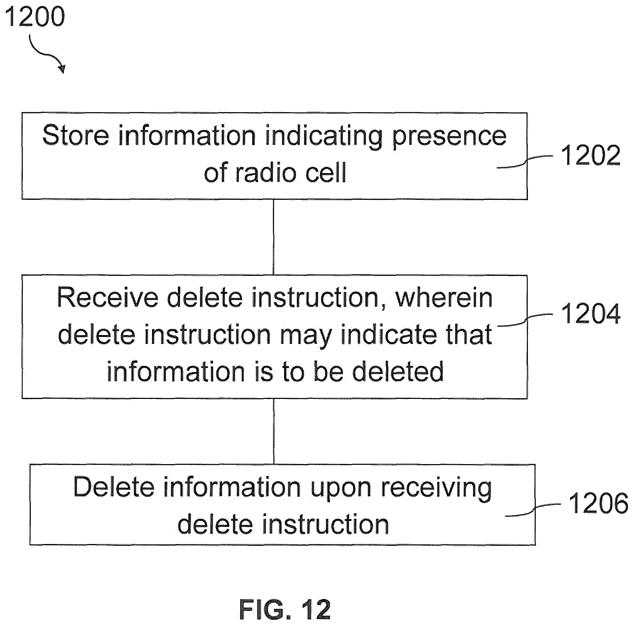

FIG. 12 shows a method 1200 for deleting information indicating a presence of a radio cell.

The method 1200 may, for example, be used to delete information indicating a presence of a radio cell from the memory 1002 of the memory circuit 1000.

The method 1200 may include storing information indicating a presence of a radio cell (in 1202); receiving a delete instruction, wherein the delete instruction may indicate that the information is to be deleted (in 1204); and deleting the information upon receiving the delete instruction (in 1206).

According to various examples described herein, a communications device may be provided. The communications device may include: a determining circuit configured to determine whether information is outdated, wherein the information indicates a presence of a radio cell; and a controller configured to generate a delete instruction in case the determining circuit determines that the information is outdated, wherein the delete instruction may indicate that the information is to be deleted.

The communications device may include, or may be, a terminal, which may be subscribed to the radio cell.

The communications device may include, or may be, a network component of a radio communications network.

The network component may be a base station of another radio cell, namely a radio cell other than the one whose presence is indicated by the information.

The radio cell whose presence is indicated by the information may have a first region of coverage, and the other radio cell may have a second region of coverage, where the second region of coverage may be wider than the first region of coverage.

The radio cell whose presence is indicated by the information may have a first region of coverage, and the other radio cell may have a second region of coverage, wherein the second region of coverage may overlap at least a part of the first region of coverage.

The radio cell whose presence is indicated by the information may be at least one of a femtocell, a picocell, and a microcell.

The radio cell whose presence is indicated by the information may be a closed subscriber group cell.

The radio cell whose presence is indicated by the information may be a hybrid cell.

The other radio cell may be a macrocell.

The information may be stored in a memory, and the delete instruction may indicate that the information is to be deleted from the memory.

The communications device may further include the memory storing the information.

The determining circuit may be configured to determine whether the information is outdated based on timing information.

The timing information may be stored in a memory, and the determining circuit may be configured to determine whether the information is outdated based on the timing information stored in the memory.

The communications device may further include the memory storing the timing information.

The timing information may include a collection timestamp and an update timestamp, where the collection timestamp may indicate a time at which the information is collected, and where the update timestamp may indicate a time at which the information is updated.

The determining circuit may be configured to determine that the information is outdated when the collection timestamp is older than the update timestamp.

The communications device may further include a receiver configured to receive the update timestamp from a network component of a radio communications network.

The timing information may include a collection timestamp and a deletion time, where the collection timestamp may indicates time at which the information is collected, and where the deletion time may indicate a time to delete the information.

The determining circuit may be configured to determine that the information is outdated when the collection timestamp is older than or equal to the deletion time.

The determining circuit may be configured to determine the deletion time based on an identity of the radio cell.

The determining circuit may be further configured to determine whether the information is outdated upon setting of a trigger flag, wherein setting the trigger flag triggers the determining circuit to determine whether the information is outdated.

The trigger flag may be set by a network component of a radio communications network.

The trigger flag may be set by a broadcast message transmitted by the network component of the radio communications network.

The broadcast message may include system information.

The communications device may further include a signaling circuit configured to signal a deletion of the information upon generation of the delete instruction by the controller.

The signaling circuit may be configured to signal the deletion of the information via a radio communications technology to a terminal including a memory, wherein the memory stores the information.

According to various examples described herein, a memory circuit may be provided. The memory circuit may include a memory, wherein the memory may store information indicating a presence of a radio cell, an interface configured to receive a delete instruction, wherein the delete instruction may indicate that the information is to be deleted; and a memory controller configured to delete the information from the memory when the interface receives the delete instruction.

The interface may be configured to receive the delete instruction from a network component of a radio communications system.

The interface may be configured to receive the delete instruction from a test equipment.

The delete instruction may be a test command.

The test command may be an AT command.

According to various examples described herein, a method for deleting information indicating a presence of a radio cell may be provided. The method may include: storing information indicating a presence of a radio cell; receiving a delete instruction, wherein the delete instruction indicates that the information is to be deleted; and deleting the information upon receiving the delete instruction.

According to various examples described herein, a method for indicating a deletion of information indicating a presence of a radio cell may be provided. The method may include: determining whether the information is outdated; and generating a delete instruction in case the information is determined to be outdated, wherein the delete instruction may indicate that the information is to be deleted.

Various examples and aspects described in the context of one of the devices or methods described herein may be analogously valid for the other devices or methods described herein.

## Claims

1. A user equipment (102), comprising:
a receiver (610) for receiving a broadcast message comprising broadcast system information from a base station (106); and
a memory (608) for storing a list (900) of one or more closed subscriber group radio cells (205);
said list (900) comprising, for each of the one or more closed subscriber group radio cells (205), a radio cell identity (302a-1), information (402-1) indicating the presence of the closed subscriber group radio cell (205), and a trigger flag (902-1); the user equipment (102) further comprising:
a determining circuit (602) configured to determine, upon setting of the trigger flag (902-1) by the broadcast system information, whether the information (402-1) is outdated; and
a controller (604) configured to generate a delete instruction (606) in case the determining circuit (602) determines that the information (402-1) is outdated, wherein the delete instruction (606) indicates that the outdated information (402-1) is to be deleted from the memory (608).

2. The communications device of claim 1, wherein the user equipment is subscribed to a radio cell of the base station (106).

3. The communications device of any one of claims 2, wherein the radio cell is at least one of a femtocell, a picocell, a microcell and a closed subscriber group cell.

4. The communications device of any one of claims 1-3, wherein the determining circuit (602) is further configured to determine whether the information (402-1) is outdated based on timing information (702-1) stored in the memory (608).

5. The communications device of claim 8, wherein the timing information comprises a collection timestamp (702-1) and an update timestamp (702-U), wherein the collection timestamp (702-1) indicates a time at which the information (402-1) is collected, and wherein the update timestamp (702-U) indicates a time at which the information (402-1) is updated.

6. The communications device of claim 5, wherein the determining circuit (602) is configured to determine that the information (402-1) is outdated when the collection timestamp (702-1) is older than the update timestamp (702-U).

7. The communications device of claim 5, wherein the receiver (610) is configured to receive the update timestamp (702-U) from the base station (106).

8. The communications device of claim 4, wherein the timing information comprises a collection timestamp (702-1) and a deletion time (802-1), wherein the collection timestamp (702-1) indicates a time at which the information (402-1) is collected, and wherein the deletion time (802-1) indicates a time to delete the information (402-1).

9. The communications device of claim 8, wherein the determining circuit (602) is configured to determine that the information (402-1) is outdated when the collection timestamp (702-1) is older than or equal to the deletion time (802-1).

10. The communications device of claim 8, wherein the determining circuit (602) is configured to determine the deletion time (802-1) based on an identity of the closed subscriber group radio cell (205).

11. A method comprising the following steps performed by a user equipment (102):
receiving a broadcast message comprising broadcast system information from a base station (106); and
storing a list (900) of one or more previously visited closed subscriber group radio cells (205);
said list (900) comprising, for each of the one or more closed subscriber group radio cells (205), a radio cell identity (302a-1), information (402-1) indicating the presence of the closed subscriber group radio cell (205), and a trigger flag (902-1); and
the method further comprising the steps of:
determining, upon setting of the trigger flag (902-1) by the broadcast system information, whether the information (402-1) is outdated; and
generating a delete instruction (606) in case the information (402-1) is determined to be outdated, wherein the delete instruction (606) indicates that the information (402-1) is to be deleted.

12. One or more computer-readable media storing instructions what, when executed by a user equipment (102), cause the user equipment (102) to perform the following steps:
receiving a broadcast message comprising broadcast system information from a base station (106); and
storing a list (900) of one or more previously visited closed subscriber group radio cells (205);
said list (900) comprising, for each of the one or more closed user group radio cells (205), a radio cell identity (302a-1), information (402-1) indicating the presence of the closed subscriber group radio cell (205), and a trigger flag (902-1); and
the execution of the instructions further causing the user equipment (102) to perform the steps of:
determining, upon setting of the trigger flag (902-1) by the broadcast system information, whether the information (402-1) is outdated; and
generating a delete instruction (606) in case the information (402-1) is determined to be outdated, wherein the delete instruction (606) indicates that the information (402-1) is to be deleted.

## Patentansprüche

1. Benutzerausrüstung (102), umfassend:
einen Empfänger (610) zum Empfangen einer Broadcast-Nachricht, umfassend Broadcast-System-Informationen von einer Basisstation (106); und
einen Speicher (608) zum Speichern einer Liste (900) von einer oder mehreren geschlossenen Teilnehmergruppenfunkzellen (205);
die Liste (900) umfassend, für jede der einen oder mehreren geschlossenen Teilnehmergruppenfunkzellen (205), eine Funkzellenidentität (302a-1), Informationen (402-1), die das Vorhandensein der geschlossenen Teilnehmergruppenfunkzelle (205) anzeigen, und ein Auslöser-Flag (902-1);
die Benutzerausrüstung (102) ferner umfassend:
eine Bestimmungsschaltung (602), die dazu konfiguriert ist, nach einem Festlegen des Auslöser-Flags (902-1) durch die Broadcast-System-Informationen, zu bestimmen, ob die Informationen (402-1) veraltet sind; und
eine Steuerung (604), die dazu konfiguriert ist, eine Löschanweisung (606) zu erzeugen, falls die Bestimmungsschaltung (602) bestimmt, dass die Informationen (402-1) veraltet sind, wobei die Löschanweisung (606) anzeigt, dass die veralteten Informationen (402-1) aus dem Speicher (608) zu löschen sind.

2. Kommunikationsvorrichtung nach Anspruch 1, wobei die Benutzerausrüstung zu einer Funkzelle der Basisstation (106) subskribiert ist.

3. Kommunikationsvorrichtung nach einem der Ansprüche 2, wobei die Funkzelle zumindest eines von einer Femtozelle, einer Picozelle, einer Mikrozelle und einer geschlossenen Teilnehmergruppenzelle ist.

4. Kommunikationsvorrichtung nach einem der Ansprüche 1-3, wobei die Bestimmungsschaltung (602) ferner dazu konfiguriert ist, basierend auf in dem Speicher (608) gespeicherten Zeitplanungsinformationen (702-1) zu bestimmen, ob die Informationen (402-1) veraltet sind.

5. Kommunikationsvorrichtung nach Anspruch 8, wobei die Zeitplanungsinformationen einen Erfassungszeitstempel (702-1) und einen Aktualisierungszeitstempel (702-U) umfassen, wobei der Erfassungszeitstempel (702-1) eine Zeit anzeigt, zu der die Informationen (402-1) erfasst werden, und wobei der Aktualisierungszeitstempel (702-U) eine Zeit anzeigt, zu der die Informationen (402-1) aktualisiert werden.

6. Kommunikationsvorrichtung nach Anspruch 5, wobei die Bestimmungsschaltung (602) dazu konfiguriert ist, zu bestimmen, dass die Informationen (402-1) veraltet sind, wenn der Erfassungszeitstempel (702-1) älter als der Aktualisierungszeitstempel (702-U) ist.

7. Kommunikationsvorrichtung nach Anspruch 5, wobei der Empfänger (610) dazu konfiguriert ist, den Aktualisierungszeitstempel (702-U) von der Basisstation (106) zu empfangen.

8. Kommunikationsvorrichtung nach Anspruch 4, wobei die Zeitplanungsinformationen einen Erfassungszeitstempel (702-1) und eine Löschzeit (802-1) umfassen, wobei der Erfassungszeitstempel (702-1) eine Zeit anzeigt, zu der die Informationen (402-1) erfasst werden, und wobei die Löschzeit (802-1) eine Zeit zum Löschen der Informationen (402-1) anzeigt.

9. Kommunikationsvorrichtung nach Anspruch 8, wobei die Bestimmungsschaltung (602) dazu konfiguriert ist, zu bestimmen, dass die Informationen (402-1) veraltet sind, wenn der Erfassungszeitstempel (702-1) älter als die oder gleich der Löschzeit (802-1) ist.

10. Kommunikationsvorrichtung nach Anspruch 8, wobei die Bestimmungsschaltung (602) dazu konfiguriert ist, die Löschzeit (802-1) basierend auf einer Identität der geschlossenen Teilnehmergruppenfunkzelle (205) zu bestimmen.

11. Verfahren, umfassend die folgenden Schritte, durchgeführt durch eine Benutzerausrüstung (102):
Empfangen einer Broadcast-Nachricht, umfassend Broadcast-System-Informationen von einer Basisstation (106); und
Speichern einer Liste (900) von einer oder mehreren zuvor besuchten geschlossenen Teilnehmergruppenfunkzellen (205);
die Liste (900) umfassend, für jede der einen oder mehreren geschlossenen Teilnehmergruppenfunkzellen (205), eine Funkzellenidentität (302a-1), Informationen (402-1), die das Vorhandensein der geschlossenen Teilnehmergruppenfunkzelle (205) anzeigen, und ein Auslöser-Flag (902-1); und
wobei das Verfahren ferner die folgenden Schritte umfasst:
Bestimmen, nach einem Festlegen des Auslöser-Flags (902-1) durch die Broadcast-System-Informationen, ob die Informationen (402-1) veraltet sind; und
Erzeugen einer Löschanweisung (606), falls bestimmt wird, dass die Informationen (402-1) veraltet sind, wobei die Löschanweisung (606) anzeigt, dass die Informationen (402-1) zu löschen sind.

12. Computerlesbares Medium oder mehrere computerlesbare Medien, die Anweisungen speichern, die bei Ausführung durch eine Benutzerausrüstung (102) die Benutzerausrüstung (102) dazu veranlassen, die folgenden Schritte durchzuführen:
Empfangen einer Broadcast-Nachricht, umfassend Broadcast-System-Informationen von einer Basisstation (106); und
Speichern einer Liste (900) von einer oder mehreren zuvor besuchten geschlossenen Teilnehmergruppenfunkzellen (205);
die Liste (900) umfassend, für jede der einen oder mehreren geschlossenen Teilnehmergruppenfunkzellen (205), eine Funkzellenidentität (302a-1), Informationen (402-1), die das Vorhandensein der geschlossenen Teilnehmergruppenfunkzelle (205) anzeigen, und ein Auslöser-Flag (902-1); und
wobei die Ausführung der Anweisungen ferner die Benutzerausrüstung (102) dazu veranlasst, die folgenden Schritte durchzuführen:
Bestimmen, nach einem Festlegen des Auslöser-Flags (902-1) durch die Broadcast-System-Informationen, ob die Informationen (402-1) veraltet sind; und
Erzeugen einer Löschanweisung (606), falls bestimmt wird, dass die Informationen (402-1) veraltet sind, wobei die Löschanweisung (606) anzeigt, dass die Informationen (402-1) zu löschen sind.

## Revendications

1. Equipement utilisateur (102) comprenant :
un récepteur (610) pour recevoir un message de diffusion comprenant des informations de système de diffusion en provenance d'une station de base (106) ; et
une mémoire (608) pour stocker une liste (900) d'une ou de plusieurs cellules radio de groupe fermé d'abonnés (205) ;
ladite liste (900) comprenant, pour chacune de la ou des cellules radio de groupe fermé d'abonnés (205), une identité de cellule radio (302a-1), des informations (402-1) indiquant la présence de la cellule radio de groupe fermé d'abonnés (205), et un drapeau de déclenchement (902-1) ;
l'équipement utilisateur (102) comprenant en outre :
un circuit de détermination (602) configuré pour déterminer, lors du réglage du drapeau de déclenchement (902-1) par les informations de système de diffusion, si les informations (402-1) sont périmées ; et
un contrôleur (604) configuré pour générer une instruction de suppression (606) dans le cas où le circuit de détermination (602) détermine que les informations (402-1) sont périmées,
l'instruction de suppression (606) indiquant que les informations périmées (402-1) doivent être supprimées de la mémoire (608).

2. Dispositif de communication selon la revendication 1, l'équipement utilisateur étant abonné à une cellule radio de la station de base (106).

3. Dispositif de communication selon l'une quelconque des revendications 2, la cellule radio étant au moins l'une parmi une femtocellule, une picocellule, une microcellule et une cellule de groupe fermé d'abonnés.

4. Dispositif de communication selon l'une quelconque des revendications 1 à 3, le circuit de détermination (602) étant en outre configuré pour déterminer si les informations (402-1) sont périmées sur la base d'informations de synchronisation (702-1) stockées dans la mémoire (608).

5. Dispositif de communication selon la revendication 8, les informations de synchronisation comprenant une estampille temporelle de collecte (702-1) et une estampille temporelle de mise à jour (702-U),
l'estampille temporelle de collecte (702-1) indiquant un instant auquel les informations (402-1) sont collectées, et l'estampille temporelle de mise à jour (702-U) indiquant un instant auquel les informations (402-1) sont mises à jour.

6. Dispositif de communication selon la revendication 5, le circuit de détermination (602) étant configuré pour déterminer que les informations (402-1) sont périmées lorsque l'estampille temporelle de collecte (702-1) est plus ancienne que l'estampille temporelle de mise à jour (702-U).

7. Dispositif de communication selon la revendication 5, le récepteur (610) étant configuré pour recevoir l'estampille temporelle de mise à jour (702-U) à partir de la station de base (106).

8. Dispositif de communication selon la revendication 4, les informations de synchronisation comprenant :
une estampille temporelle de collecte (702-1) et un instant de suppression (802-1), l'estampille temporelle de collecte (702-1) indiquant un instant auquel les informations (402-1) sont collectées,
et l'instant de suppression (802-1) indiquant un instant pour supprimer les informations (402-1).

9. Dispositif de communication selon la revendication 8, le circuit de détermination (602) étant configuré pour déterminer que les informations (402-1) sont périmées lorsque l'estampille temporelle de collecte (702-1) est plus ancienne ou égale à l'instant de suppression (802-1).

10. Dispositif de communication selon la revendication 8, le circuit de détermination (602) étant configuré pour déterminer l'instant de suppression (802-1) sur la base d'une identité de la cellule radio de groupe fermé d'abonnés (205).

11. Procédé comprenant les étapes suivantes réalisées par un équipement utilisateur (102) :
la réception d'un message de diffusion comprenant des informations de système de diffusion à partir d'une station de base (106) ; et
le stockage d'une liste (900) d'une ou de plusieurs cellules radio de groupe fermé d'abonnés précédemment visitées (205) ;
ladite liste (900) comprenant, pour chacune de la ou des cellules radio de groupe fermé d'abonnés (205), une identité de cellule radio (302a-1), des informations (402-1) indiquant la présence d'une cellule radio de groupe fermé d'abonnés (205), et un drapeau de déclenchement (902-1) ; et
le procédé comprenant en outre les étapes consistant à :
la détermination, lors du réglage du drapeau de déclenchement (902-1) par les informations de système de diffusion, du fait de savoir si les informations (402-1) sont périmées ; et
la génération d'une instruction de suppression (606) dans le cas où les informations (402-1) sont déterminées comme étant périmées, l'instruction de suppression (606) indiquant que les informations (402-1) doivent être supprimées.

12. Un ou plusieurs supports lisibles par ordinateur stockant des instructions qui, lorsqu'elles sont exécutées par un équipement utilisateur (102), amènent l'équipement utilisateur (102) à réaliser les étapes suivantes :
la réception d'un message de diffusion comprenant des informations de système de diffusion à partir d'une station de base (106) ; et
le stockage d'une liste (900) d'une ou de plusieurs cellules radio de groupe fermé d'abonnés précédemment visitées (205) ;
ladite liste (900) comprenant, pour chacune de la ou des cellules radio de groupe fermé d'utilisateurs (205), une identité de cellule radio (302a-1),
des informations (402-1) indiquant la présence de la cellule radio de groupe fermé d'abonnés (205), et un drapeau de déclenchement (902-1) ; et
l'exécution des instructions amenant en outre l'équipement utilisateur (102) à effectuer les étapes de :
la détermination, lors du réglage du drapeau de déclenchement (902-1) par les informations de système de diffusion, du fait de savoir si les informations (402-1) sont périmées ; et
la génération d'une instruction de suppression (606) dans le cas où les informations (402-1) sont déterminées comme étant périmées, l'instruction de suppression (606) indiquant que les informations (402-1) doivent être supprimées.
